# EUROPÄISCHE PATENTSCHRIFT

(11) **EP 1 390 243 B1**
(45) Veröffentlichungstag und Bekanntmachung des Hinweises auf die Patenterteilung: **12.04.2006**
(21) Anmeldenummer: 02766640.3
(22) Anmeldetag: 26.04.2002
(51) Int. Cl.: B60T 13/68

(54) **ELEKTROPNEUMATISCHES REGELVENTIL MIT EINER FÜHRUNGSANORDNUNG FÜR EINEN STEUERKOLBEN**
ELECTROPNEUMATIC CONTROL VALVE COMPRISING A GUIDE ARRANGEMENT FOR A CONTROL PISTON
SOUPAPE DE REGLAGE ELECTROPNEUMATIQUE COMPRENANT UN ENSEMBLE DE GUIDAGE POUR UN PISTON DE COMMANDE

(30) Priorität: 26.04.2001 DE 10120321
(43) Veröffentlichungstag der Anmeldung: 25.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DELFS, Joachim, 71282 Hemmingen (DE); DEJA, Siegmund, 71691 Freiberg (DE); SCHAFFERT, Eberhard, 71229 Leonberg (DE); STROBEL, Günther, 71254 Ditzingen (DE); HAECKER, Hans, 71229 Leonberg (DE); JUDITH, Martin, 74321 Bietigheim-Bissingen (DE)
(86) Internationale Anmeldenummer: PCT/EP2002/004627
(87) Internationale Veröffentlichungsnummer: WO 2002/087947

(56) Entgegenhaltungen:
- EP-A- 1 022 204
- DE-A- 3 931 761
- DE-A- 4 136 244
- DE-A- 19 605 562
- DE-A- 19 609 222

## Beschreibung

Die Erfindung betrifft ein elektropneumatisches Regelventil für ein Druckluftbremssystem eines Fahrzeuges mit einem Relaisventilgehäuse, in dem ein axial verstellbarer Steuerkolben zur Betätigung einer den Druckluftfluss zwischen zumindest einem außenliegenden Bremsleitungsanschluss, einem Speisedruckanschluss sowie einem Entlüftungsanschluss schaltenden Ventilsitzanordnung angeordnet ist. Der Steuerkolben des Regelventils ist über eine Führungsanordnung axial geführt und über mindestens ein elektromagnetisches Vorsteuerventil zur Axialverstellung mit einem Steuerdruck beaufschlagbar, welches in einem mit dem Relaisventilgehäuse verbundenen Vorsteuerventilgehäuse untergebracht ist. Speziell betrifft die vorliegende Erfindung eine besondere konstruktive Ausgestaltung der Führungsanordnung des Steuerkolbens.
Ein gattungsgemäßes Regelventil wird innerhalb eines Druckluftbremssystems eines Fahrzeuges eingesetzt, um einen Bremsdruck entsprechend der gewünschten Bremswirkung auszuregeln. Eine vom Regelventil ausgehende Bremsleitung steht gewöhnlich zu diesem Zwecke mit einem Bremszylinder am Fahrzeugrad in Verbindung, der die zum Bremsen des Fahrzeugrades benötigte Bremskraft für eine hieran angeschlossene Scheiben- oder Trommelbremse erzeugt. Die Vorgabe des Druck-Sollwertes für das elektropneumatische Regelventil kann sowohl elektrisch als auch pneumatisch erfolgen. Die pneumatische Ansteuerung wird meist jedoch nur zur Sicherheit im Falle eines Ausfalls der elektrischen Ansteuerung genutzt.

Ein derartiges elektropneumatisches Regelventil ist aus der DE 39 31 761 C2 bekannt. Das Regelventil weist einen großflächigen Steuerkolben auf, der axial verschiebbar innerhalb eines zylindrischen Hohlraumes eines Relaisventilgehäuses untergebracht ist. Der Steuerkolben trennt den Hohlraum dabei in eine Steuerkammer sowie eine Arbeitskammer. Seitens der Arbeitskammer ist am Steuerkolben ein koaxialer Hohlzapfen ausgebildet, der zur Betätigung einer benachbarten Ventilsitzanordnung dient. Die Ventilsitzanordnung schaltet durch eine axiale Verstellung eines federverspannten Ventilrohrs den Druckluftfluss zwischen einem außenliegenden Bremsleitungsanschluss, einem Speisedruckanschluss sowie einem Entlüftungsanschluss.

Über eine Vorsteuerventilanordnung ist der Steuerkolben mit einem Steuerdruck seitens der Steuerkammer beaufschlagbar. Die Vorsteuerventilanordnung besteht hier aus zwei elektropneumatischen Vorsteuerventilen, die durch eine koordinierte Bestromung der integrierten elektrischen Spulen ein Ansteigen, Halten oder Absenken des Steuerdrucks innerhalb der Steuerkammer bewirken, um im Zusammenwirken mit der auf der gegenüberliegenden Seite des Steuerkolbens angeordneten Rückstellfeder die gewünschte Bewegung des Steuerkolbens zu realisieren.

Die aufgrund der Großflächigkeit des Steuerkolbens erforderliche axiale Führung wird hier über eine koaxiale Führungsbohrung im Vorsteuerventilgehäuse erzielt, die mit einem am Steuerkolben koaxial angeformten Führungszapfen korrespondiert.

Diese Art der Führung hat jedoch den Nachteil, dass die seitens des Vorsteuerventilgehäuses anzubringende Führungsbohrung hochgenau und mit hoher Oberflächengüte gefertigt werden muss, um ein Verklemmen oder Verkanten des Steuerkolbens innerhalb des zylindrischen Hohlraums bei Betrieb zu vermeiden. Weiterhin verursacht diese bekannte Führungsanordung eine relativ komplizierte Formgebung des Steuerkolbens, der hierdurch aufwendig zu fertigen ist. Dies gilt insbesondere auch für die Herstellung der den Steuerkolben koaxial durchziehenden Durchgangsbohrung, welche der Ableitung von Abluft von der Steuerkammer zum Entlüftungsanschluss dient. Die Durchgangsbohrung weist hier einen relativ großen Durchmesser auf, um eine schnelle Entlüftung der Steuerkammer zu ermöglichen.

In der Praxis ist auch bereits versucht worden, eine Führungsanordnung für den Steuerkolben nach einem anderen, konstruktiv einfacheren Prinzip zu gestalten, welches aus der DE 196 05 562 A1 bekannt ist. Zur Führung wird hierbei eine Hülse verwendet, die in eine geeignete koaxiale Ausnehmung seitens des Vorsteuerventils angefügt ist. Über den Außendurchmesser der insoweit über das Vorsteuerventilgehäuse hervorstehenden Hülse wird die Führung des Steuerkolbens, der zu diesem Zwecke mit einer korrespondierenden koaxialen Durchgangsbohrung versehen ist, realisiert.

Die Befestigung der Hülse am Vorsteuerventilgehäuse erfolgt hier mit einem Radial- und/oder Schwenkspiel zum Ausgleich eines fertigungsbedingten Spiels zwischen dem Steuerkolben und dem Vorsteuerventilgehäuse. Jedoch führt diese Art der Führung des Steuerkolbens zu einer Verschlechterung der Führungseigenschaften, da durch das Schwenk- und/oder Radialspiel ein Kippen des Steuerkolbens möglich ist.

Weiterhin bedingt das hier angewendete Führungsprinzip einen durch die herrschenden baulichen Randbedingungen verursachten geringen Platz für die Durchgangsbohrung zum Ableiten der Abluft aus der Steuerkammer. Insoweit ist nur ein vergleichsweise geringer wirksamer Querschnitt möglich.

Es ist daher die Aufgabe der vorliegenden Erfindung ein elektropneumatisches Regelventil der vorstehend beschriebenen Art dahingehend weiter zu verbessern, dass eine präzise Führung des Steuerkolbens mit einer wirkungsvollen integrierten Abluftführung unter geringem Fertigungsaufwand möglich ist.

Die Aufgabe wird ausgehend von einem elektropneumatischen Regelventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Führungsanordnung des Steuerkolbens aus einer am Vorsteuerventilgehäuse befestigten separaten Führungshülse besteht, die mit einem oberen Führungsabschnitt versehen ist, der zur axialen Führung mit einer Durchgangsbohrung im Steuerkolben korrespondiert, und die außerdem einen sich an den oberen Führungsabschnitt anschließenden unteren Rohrabschnitt geringeren Außendurchmessers aufweist, um die durch einen integrierten axialen Entlüftungskanal fließende Abluft über den Bereich der Ventilsitzanordnung hinweg direkt an den Entlüftungsanschluss zu leiten.

Der Vorteil der Erfindung liegt insbesondere in der besonderen Ausgestaltung der zum Einsatz kommenden Führungshülse, die sowohl eine präzise Führungsfunktion für den Steuerkolben als auch eine wirkungsvolle Abluftführung schafft. Wegen des besonders langen Entlüftungskanals, der sich direkt bis zum Entlüftungsanschluss über den Bereich der Ventilsitzanordnung hinweg erstreckt, gelangt die Öffnung des Entlüftungskanals in einen Bereich eines kleineren Staudrucks, wodurch wegen des geringen herrschenden Gegendrucks in der Nähe des Entlüftungsausschlusses eine trotz des relativ geringen Durchmessers des Entlüftungskanals schnellere Entlüftung der Steuerkammer erzielt wird. Überraschenderweise wirkt der in der Abluftströmung der Arbeitskammer liegende Rohrabschnitt bei Entlüftung der Bremsleitung eine extreme Geräuschminderung.

Um das durch die am elektropneumatischen Regelventil ausströmende Abluft verursachte Geräusch weiter zu minimieren, kann am Entlüftungsanschluss zusätzlich ein Schalldämpfer angebracht werden. Im Zusammenwirken mit dem Schalldämpfer ist das distale Ende des Rohrabschnittes der Führungshülse zerklüftet ausgebildet, um ein freies Ausströmen der aus dem Entlüftungskanal austretenden Abluft zu gewährleisten. Durch diese Anordnung wird insgesamt ein sehr niedriger Geräuschpegel erzielt, der selbst strengen Anforderungen an ein gattungsgemäßes Regelventil gerecht wird.

Vorzugsweise besteht die erfindungsgemäße Führungshülse zumindest im Bereich des Führungsabschnittes aus einem Kunststoff mit geringem Gleitreibungskoeffizienten. Hierdurch wird eine für die Axialführung günstige geringe Gleitreibung erzielt, da der Steuerkolben als Reibungspartner vorzugsweise ebenfalls aus Kunststoff hergestellt ist. Es ist auch denkbar, andere geeignete Materialpaarungen zu verwenden. Die korrespondierende Durchgangsbohrung im Steuerkolben kann insoweit auch mit einer Teflonbuchse oder dergleichen versehen werden.

Gemäß einer weiteren die Erfindung verbessernden Maßnahme ist zur Befestigung der Führungshülse ein am Vorsteuerventilgehäuse angeformter Führungszapfen vorgesehen, wobei über eine kraftschlüssige Presspassung eine Verbindung mit der Führungshülse hergestellt wird. Korrespondierend zum Führungszapfen weist die Führungshülse im Bereich des Führungsabschnitts vorzugsweise eine zum Entlüftungskanal im wesentlichen koaxial verlaufende zylindrische Ausnehmung größeren Durchmessers auf, worüber die Befestigung durch Aufpressen auf den Führungszapfen erfolgt. Da es hierbei ausreichend ist, innerhalb der Ausnehmung lediglich zwei axial beabstandet angeordnete ringförmige Passabschnitte vorzusehen, die am Führungszapfen zur Anlage kommen, kann dieses Aufpressen wegen der insoweit minimierten Aufpresskraft auch manuell erfolgen. Die beiden beabstandet angeordneten ringförmigen Passabschnitte gewährleisten zudem eine exakte Positionierung der Führungshülse relativ zum Führungszapfen.

Gemäß einer weiteren vorteilhaften Ausgestaltung der Führungshülse ist im distalen Endbereich des Rohrabschnittes ein Absatz ausgebildet, um hierüber eine endseitige formschlüssige Fixierung der Führungshülse ortsfest zum Relaisventilgehäuse zu ermöglichen. Im Ergebnis dessen ist die Führungshülse trotz der großen Länge zu beiden Enden, nämlich im oberen Bereich der Ausnehmung sowie im unteren Bereich der Öffnung des Entlüftungskanals, sicher innerhalb des Relaisventilgehäuses fixiert.

Um ein besonders schnelles Ausströmen der Abluft aus dem Entlüftungskanal zu unterstützen, ist es von Vorteil, wenn der Strömungsquerschnitt des Entlüftungskanals maximal ist. Dem steht jedoch entgegen, dass eine minimale erforderliche Wandstärke des Rohrabschnittes erhalten bleiben muss, um eine ausreichende Stabilität des Rohrabschnittes sicherzustellen. Der Außendurchmesser des Rohrabschnittes ist wiederum begrenzt durch einen minimal erforderlichen Ringspalt für die Abluft aus der Bremsleitung bei deren Entlüftung. Um all diese Erfordernisse zu erfüllen, kann die Wandung des Rohrabschnittes zusätzlich über eine Rippenanordnung verstärkt werden, so dass die erforderliche Wandstärke sowie der Gesamtdurchmesser des Rohrabschnittes so klein wie möglich gehalten wird und trotzdem eine ausreichende Stabilität gegeben ist. Die Rippenanordnung besteht vorzugsweise aus mehreren sich axial entlang der Außenwandung des Rohrabschnittes erstreckenden Rippenanformungen. Die Rippenanformungen sind dabei im wesentlichen achsparallel zum Rohrabschnitt ausgerichtet sowie im Querschnitt gesehen äquidistant zueinander angeordnet. Es ergibt sich im Querschnitt gesehen somit eine Art Sternform.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen Längsschnitt durch ein elektropneumatisches Regelventil mit einer erfindungsgemäßen Führungsanordnung für den innenliegenden Steuerkolben,
- Fig. 2: einen Längsschnitt durch die bei der Führungsanordnung verwendete Führungshülse, und
- Fig. 3: einen Querschnitt durch die Führungshülse im Bereich des Rohrabschnitts.

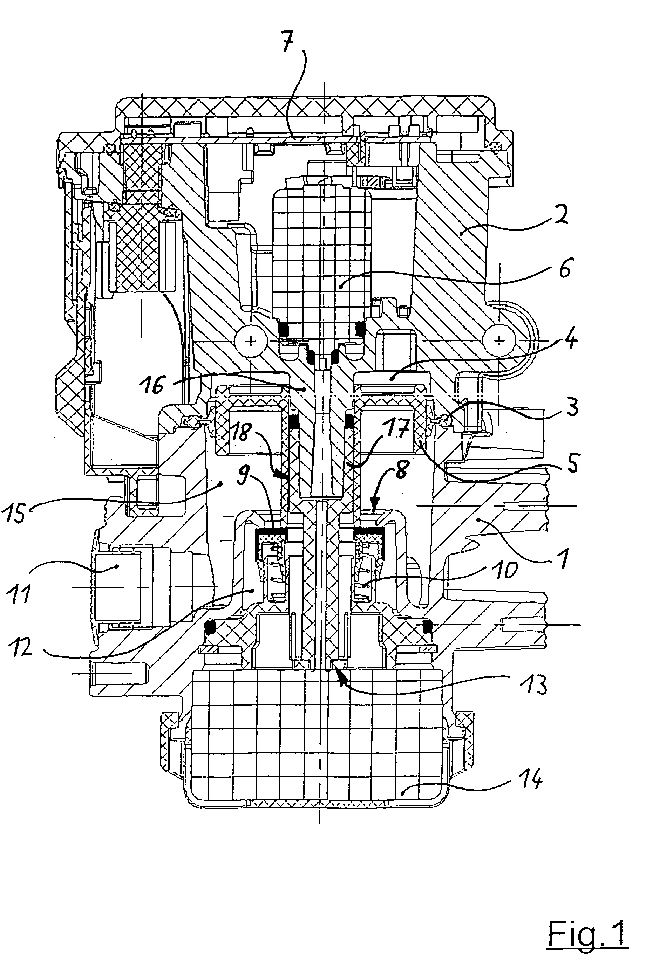

Das elektropneumatische Regelventil gemäß Fig. 1 weist eine im Wesentlichen zweiteilig aufgebaute Gehäuseanordnung auf, die hier aus einem unteren Relaisventilgehäuse 1 besteht, das mit einem oberen Vorsteuerventilgehäuse 2 über ein dazwischenliegendes Dichtungselement 3 verbunden ist. Die Verbindung erfolgt dabei über eine (nicht weiter dargestellte) Verschraubung. Das Relaisventilgehäuse 1 und das Vorsteuerventilgehäuse 2 schließen eine innenliegende Steuerkammer 4 ein, in der ein Steuerkolben 5 axial bewegbar angeordnet ist. Zur Axialverstellung des Steuerkolbens 5 dient eine im Vorsteuerventilgehäuse 2 untergebrachte Vorsteuerventilanordnung, von der hier lediglich ein als Auslassmagnet dienendes. Vorsteuerventil 6 gezeigt ist. Die Vorsteuerventilanordnung wird über eine Elektronikeinheit 7 elektrisch angesteuert. Das gezeigte Vorsteuerventil 6 dient als Auslassventil und entlüftet insoweit bei Betätigung die Steuerkammer 4, wobei die Abluft an die Atmosphäre abgeleitet wird. Daneben ist ein (hier nicht gezeigtes) zweites Vorsteuerventil als Einlassventil vorhanden, das für eine Beaufschlagung der Steuerkammer 4 mit einem Steuerdruck dient, um den Steuerkolben 5 zu bewegen.

Bei einer Beaufschlagung der Steuerkammer 4 betätigt der Steuerkolben 5 über eine untere hülsenartige Anformung eine Ventilsitzanordnung 8. Die Ventilsitzanordnung 8 besteht im Wesentlichen aus einem Verschlusselement 9, das durch die Kraft einer rückstellenden Feder 10 gegen zwei konzentrisch angeordnete benachbarte Ventilsitze gedrückt ist. Hierüber ist der Druckluftfluss zwischen einem am Relaisventilgehäuse 1 angeordneten Bremsleitungsanschluss 11 einerseits sowie einem (hier nicht erkennbaren) Speisedruckanschluss - der mit einer internen Speisedruckkammer 12 in Verbindung steht - und einem Entlüftungsanschluss 13 andererseits schaltbar. Der Entlüftungsanschluss 13 ist zusätzlich mit einem Schalldämpfer 14 zur Geräuschminderung versehen.

Das elektropneumatische Regelventil ist hier in seiner abgeschlossenen Schaltstellung gezeigt. Bei Beaufschlagung der Steuerkammer 4 mit einem Steuerdruck und darauffolgender Bewegung des Steuerkolbens 5 in Richtung einer unteren Position erfolgt durch Öffnen des außenliegenden Ventilsitzes der Ventilsitzanordnung 8 ein Druckluftfluss, ausgehend von der Speisedruckkammer 12 zu einer Arbeitskammer 15, die an den Bremsleitungsanschluss 11 einmündet, um den Bremsdruck infolgedessen zu erhöhen.

Bei einer Entlüftung der Steuerkammer 4 wird der Steuerkolben 5 in eine obere Position überführt, wobei der innenliegende Ventilsitz der Ventilsitzanordnung 8 geöffnet wird, so dass ausgehend vom Bremsleitungsanschluss 11 Druckluft über die Arbeitskammer 15 zum Entlüftungsanschluss 13 gelangt, um den Bremsdruck entsprechend abzusenken. Somit wird der Bremsdruck durch eine wechselseitige Bewegung des Steuerkolbens 5 beeinflusst. In der mittleren, abgeschlossenen Schaltposition erfolgt kein Druckluftfluss.

Der großflächige Steuerkolben 5 ist über eine koaxiale Führungsanordnung axial geführt. Die Führungsanordnung des Steuerkolbens 5 besteht aus einer an einem Führungszapfen 16 des Vorsteuerventilgehäuses 2 angebrachten Führungshülse 17, die mit einer zentralen Durchgangsbohrung 18 im Steuerkolben 5 unter Bildung einer Axialführung gleitend zusammenwirkt.

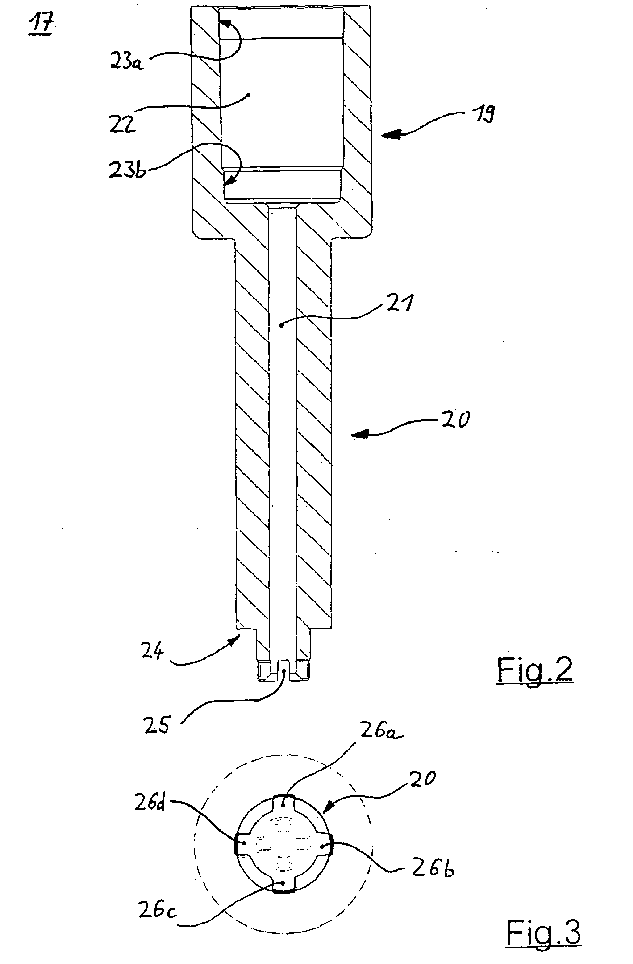

Wie im Detail aus Fig. 2 hervorgeht, besteht die Führungshülse 17 aus einem oberen Führungsabschnitt 19, an den sich ein unterer Rohrabschnitt 20 koaxial anschließt. Der untere Rohrabschnitt 20 ist gegenüber dem Führungsabschnitt 19 mit einem geringeren Außendurchmesser ausgebildet. Die Führungshülse 17 ist einstückig ausgeführt und wird durch Spritzgießen aus Kunststoff hergestellt. Koaxial durch die Führungshülse 17 hindurch verläuft ein Entlüftungskanal 21, der die bei der Entlüftung der (hier nicht gezeigten) Steuerkammer 5 anfallende Abluft direkt bis an den Entlüftungsanschluss 13 leitet. Im Bereich des Führungsabschnittes 19 ist der Entlüftungskanal 21 zu einer Ausnehmung 22 größeren Durchmessers ausgebildet. Über die Ausnehmung 22 erfolgt die Befestigung der Führungshülse 17 an dem (hier nicht gezeigten) hohlen Führungszapfen 16. Innerhalb der Ausnehmung 22 sind zwei axial beabstandet angeordnete ringförmige Passabschnitte 23a und 23b vorgesehen. Die beiden Passabschnitte 23a, 23b kommen direkt an passgenau gefertigten Abschnitten des Führungszapfens 16 zur Anlage, um eine genaue Positionierung der beiden miteinander zu verbindenden Bauteile der Führungsanordnung zu gewährleisten.

Im distalen Endbereich des Rohrabschnittes 20 ist ein Absatz 24 ausgebildet, der formschlüssig mit dem (hier nicht gezeigten) Relaisventilgehäuse 1 zusammenwirkt, um diesen Endbereich des Rohrabschnittes 20 genau zu positionieren. Das hier gelegene Ende des Rohrabschnittes 20 ist durch eine Nutanordnung 25 nach Art eines Kreuzschlitzes zerklüftet ausgebildet, um ein ungehindertes Ausströmen der aus dem Entlüftungskanal 21 austretenden Abluft zu ermöglichen.

Gemäß Fig. 3 ist die Wandung des Rohrabschnitts 20 über eine Rippenanordnung verstärkt. Die Rippenanordnung besteht hier aus vier sich axial entlang der Außenwandung des Rohrabschnitts 20 erstreckenden Rippenanformungen 26a - 26d, welche äquidistant zueinander, d. h. kreuzförmig, angeordnet sind. Durch diese Rippenanordnung wird eine ausreichende Stabilität des Rohrabschnitts 20 bei gleichzeitiger Strömungsquerschnittsmaximierung erzielt.

Die Erfindung ist nicht beschränkt auf das vorstehend angegebene bevorzugte Ausführungsbeispiel. Es sind vielmehr auch Abwandlungen hiervon denkbar, die in den Schutzbereich der nachfolgenden Ansprüche fallen können. Insbesondere ist die Erfindung nicht beschränkt auf eine zweiteilige Gehäuseanordnung für das elektropneumatische Regelventil. Es ist ebenso eine einteilige Gehäuseanordnung denkbar. Hierbei bilden das Relaisventilgehäuse sowie das Vorsteuerventilgehäuse dann Abschnitte der einteiligen Gehäuseanordnung. Genauso ist auch eine mehr als zweiteilige Gehäuseanordnung möglich.

### Bezugszeichenliste

- 1: Relaisventilgehäuse
- 2: Vorsteuerventilgehäuse
- 3: Dichtungselement
- 4: Steuerkammer
- 5: Steuerkolben
- 6: Vorsteuerventil
- 7: Elektronikeinheit
- 8: Ventilsitzanordnung
- 9: Verschlusselement
- 10: Feder
- 11: Bremsleitungsanschluss
- 12: Speisedruckkammer
- 13: Entlüftungsanschluss
- 14: Schalldämpfer
- 15: Arbeitskammer
- 16: Führungszapfen
- 17: Führungshülse
- 18: Durchgangsbohrung
- 19: Führungsabschnitt
- 20: Rohrabschnitt
- 21: Entlüftungskanal
- 22: Ausnehmung
- 23: Passabschnitte
- 24: Absatz
- 25: Nutanordnung
- 26: Rippenanformung

## Patentansprüche

1. Elektropneumatisches Regelventil für ein Druckluftbremssystem eines Fahrzeuges mit einem Relaisventilgehäuse (1), in dem ein axial verstellbarer Steuerkolben (5) zur Betätigung einer den Druckluftfluss zwischen zumindest einem außenliegenden Bremsleitungsanschluss (11), einem Speisedruckanschluss sowie einem Entlüftungsanschluss (13) schaltenden Ventilsitzanordnung (8) angeordnet ist, wobei der Steuerkolben (5) über eine koaxiale Führungsanordnung axial geführt ist und über mindestens ein elektromagnetisches Vorsteuerventil (6) zur Axialverstellung beaufschlagbar ist, welches in einem mit dem Relaisventilgehäuse (1) verbundenen Vorsteuerventilgehäuse (2) untergebracht ist,
**dadurch gekennzeichnet, dass** die Führungsanordnung des Steuerkolbens (5) eine am Vorsteuerventilgehäuse (2) ortsfest befestigte separate Führungshülse (17) umfasst, die mit einem oberen Führungsabschnitt (19) versehen ist, der zur axialen Führung mit einer Durchgangsbohrung (18) im Steuerkolben (5) korrespondiert, und die außerdem einen sich an den oberen Führungsabschnitt (19) anschließenden unteren Rohrabschnitt (20) kleineren Außendurchmessers aufweist, um die durch einen integrierten axialen Entlüftungskanal (21) fließende Abluft über den Bereich der Ventilsitzanordnung (8) hinweg direkt an den Entlüftungsanschluss (13) zu leiten.

2. Elektropneumatisches Regelventil nach Anspruch 1,
**dadurch gekennzeichnet, dass** der Entlüftungsanschluss (13) mit einem Schalldämpfer (14) versehen ist, um das durch die ausströmende Abluft verursachte Geräusch zu minimieren.

3. Elektropneumatisches Regelventil nach Anspruch 1,
**dadurch gekennzeichnet, dass** die Führungshülse (17) zumindest im Bereich des Führungsabschnitts (19) aus einem Kunststoff mit geringem Gleitreibungskoeffizienten besteht.

4. Elektropneumatisches Regelventil nach Anspruch 1,
**dadurch gekennzeichnet, dass** zur Befestigung der Führungshülse (17) am Vorsteuerventilgehäuse (2) ein hieran angeformter hohler Führungszapfen (16) vorgesehen ist, der über eine kraftschlüssige Presspassung eine Verbindung mit der Führungshülse (17) herstellt.

5. Elektropneumatisches Regelventil nach Anspruch 4,
**dadurch gekennzeichnet, dass** die Führungshülse (17) im Bereich des Führungsabschnittes (19) eine zum Entlüftungskanal (21) im wesentlichen koaxial verlaufende Ausnehmung (22) größeren Durchmessers aufweist, worüber die Befestigung durch Aufpressen auf den Führungszapfen (16) erfolgt.

6. Elektropneumatisches Regelventil nach Anspruch 5,
**dadurch gekennzeichnet, dass** innerhalb der Ausnehmung (22) zwei axial beabstandet angeordnete ringförmige Passabschnitte (23a, 23b) vorgesehen sind, die beim Aufpressen am Führungszapfen (16) zur Anlage kommen.

7. Elektropneumatisches Regelventil nach Anspruch 1,
**dadurch gekennzeichnet, dass** im distalen Endbereich des Rohrabschnittes (20) ein Absatz (24) ausgebildet ist, um hierüber eine endseitige formschlüssige Fixierung der Führungshülse (17) ortsfest zum Relaisventilgehäuse (1) zu ermöglichen.

8. Elektropneumatisches Regelventil nach Anspruch 1,
**dadurch gekennzeichnet, dass** das distale Ende des Rohrabschnittes (20) zerklüftet ausgebildet ist, um ein ungehindertes Ausströmen der aus dem Entlüftungskanal (21) austretenden Abluft zu gewährleisten.

9. Elektropneumatisches Regelventil nach Anspruch 1,
**dadurch gekennzeichnet, dass** zur Strömungsquerschnittsmaximierung des Entlüftungskanals (21) die Wandung des Rohrabschnittes (20) über eine Rippenanordnung verstärkt ist, so dass die erforderliche Wandstärke sowie der Gesamtdurchmesser im Bereich des Rohrabschnitts (20) minimal ist.

10. Elektropneumatisches Regelventil nach Anspruch 9,
**dadurch gekennzeichnet, dass** die Rippenanordnung aus mindestens vier sich axial entlang der Außenwandung des Rohrabschnitts (20) erstreckenden, im wesentlichen achsparallel zum Rohrabschnitt (20) ausgerichteten sowie im Querschnitt gesehen äquidistant zueinander angeordneten Rippenanformungen (26a bis 26d) besteht.

## Claims

1. Electro-pneumatic control valve for a compressed-air system of a vehicle, comprising a relay valve housing (1) wherein an axially adjustable control piston (5) is arranged for operating a valve seat system (8) switching the flow of compressed air between at least one brake pipe connection (11) located on the outside, a supply pressure fitting as well as a vent hole (13), with said control piston (5) being axially guided via a coaxial guiding system and being adapted to be acted upon via at least one electromagnetic pilot valve (6) for axial adjustment, which is accommodated in a pilot valve housing (2) connected to said relay valve housing (1),
**characterised in that** said guiding system of said control piston (5) includes a separate guiding sleeve (17) fixed in stationary manner on said pilot valve housing (2), which sleeve is provided with an upper guiding section (19) that corresponds with a through-hole (18) in said control piston (5) for axial guidance, and that it comprises moreover a lower pipe section (20) of a smaller outside diameter, which joins said upper guiding section (19), for passing the exhaust air flowing through an integrated axial venting passage (21) through the region of said valve seat system (8) directly to said vent hole (13).

2. Electro-pneumatic control valve according to Claim 1,
that said vent hole (13) is provided with a silencer (14) so as to minimise the noise caused by the out-flowing exhaust air.

3. Electro-pneumatic control valve according to Claim 1,
**characterised in that** said guiding sleeve (17) consists of a plastic material having a low coefficient of sliding friction at least in the area of said guiding section (19).

4. Electro-pneumatic control valve according to Claim 1
**characterised in that** a hollow guiding pin (16) is provided on said pilot valve housing (2), while being formed thereon, for fastening said guiding sleeve (17), which guiding sleeve establishes a connection to said guiding sleeve (17) via a frictional press fit.

5. Electro-pneumatic control valve according to Claim 4,
**characterised in that** said guiding sleeve (17) presents a recess (22) of a wider diameter, which extends substantially coaxially relative to said venting passage (21), in the region of said guiding section (19), through which fastening is realised by pressing onto said guiding pin (16).

6. Electro-pneumatic control valve according to Claim 5,
**characterised in that** two annular fitting sections (23a, 23b) are provided within said recess (22), which are disposed at an axial spacing and which are caused to bear against said guiding pin (16) during the pressing action.

7. Electro-pneumatic control valve according to Claim 1,
**characterised in that** a shoulder (24) is formed in the distal terminal section of said pipe section (20) so as to permit a terminal-side positive fixation of said guiding sleeve (17) stationary relative to said relay valve (1).

8. Electro-pneumatic control valve according to Claim 1,
**characterised in that** the distal end of said pipe section (20) is formed to be deeply indented in order to ensure unhindered outflow of the exhaust air leaving said venting passage (21).

9. Electro-pneumatic control valve according to Claim 1,
**characterised in that** the wall of said pipe section (20) is reinforced by means of a rib system for maximisation of the flow cross-section of said venting passage (21) so that the required wall thickness as well as the total diameter in the region of said pipe section (20) is at a minimum.

10. Electro-pneumatic control valve according to Claim 9,
**characterised in that** said rib system consists of at least four integrally formed ribs (26a to 26d) extending axially along the outside wall of said pipe section (20) and oriented substantially with an axis parallel to said pipe section (20), which ribs are disposed in equidistant arrangement when seen in a cross-sectional view.

## Revendications

1. Soupape de réglage électropneumatique pour un système à air comprimé d'un véhicule, comprenant un carter de soupape de relais (1) dans lequel un piston de commande à ajustage axial (5) est disposé à actionner un système à siège de soupape (8) branchant le courant d'air comprimé entre au moins un raccord de canalisation de freinage (11) disposé à l'extérieur, un raccord de pression d'alimentation ainsi qu'un raccord d'aération (13), audit piston de commande (5) étant guidé en sens axial via un système de guidage coaxial et étant apte à être soumis à une action via au moins un pilot valve électromagnétique (6) pour l'ajustage axial, qui est reçu dans un carter de pilot valve (2) relié audit carter de soupape de relais (1),
**caractérisée en ce que** ledit système de guidage dudit piston de commande (5) comprend un manchon de guidage séparé (17) fixé de manière stationnaire audit carter de pilot valve (2), quel manchon est pourvu d'une section de guidage supérieure (19), qui correspond avec un orifice de passage (18) dans ledit piston de commande (5) pour guidage axial, et **en ce qu'**il comprend au plus une section de tube inférieure (20) d'un plus petit diamètre, qui se joigne à ladite section de guidage supérieure (19) afin de passer de l'air évacué s'écoulant par une canalisation axiale intégrée d'aération (21), à la zone dudit système de siège de soupape (8) directement vers ledit raccord d'aération (13).

2. Soupape de réglage électropneumatique selon la revendication 1,
**caractérisée en ce que** ledit raccord d'aération (13) est muni d'un silencieux (14) afin de minimiser le bruit causé par l'air évacué sortant.

3. Soupape de réglage électropneumatique selon la revendication 1,
**caractérisée en ce que** ledit manchon de guidage (17) consiste en matière plastique à un petit coefficient de frottement glissant au moins dans la zone de ladite section de guidage (19).

4. Soupape de réglage électropneumatique selon la revendication 1
**caractérisée en ce qu'**un goujon de guidage creux (16) est disposé audit carter de pilot valve (2), en étant formé au dernier, pour le fixage dudit manchon de guidage (17), qui établit une connexion audit manchon de guidage (17) via un ajustement forcé par friction.

5. Soupape de réglage électropneumatique selon la revendication 4,
**caractérisée en ce que** ledit manchon de guidage (17) présente un évidement (22) d'un plus grand diamètre, qui s'étend essentiellement en arrangement coaxial relativement à ladite canalisation d'aération (21), dans la zone de ladite section de guidage (19), via lequel se fait la fixation par pression sur ledit goujon de guidage (16).

6. Soupape de réglage électropneumatique selon la revendication 5,
**caractérisée en ce que** deux sections annulaires d'ajustement (23a, 23b) sont prévues au-dedans dudit évidemment (22), qui sont disposées à un écart axial et qui sont causés à porter contre ledit goujon de guidage (16) au cours de l'action de pressage.

7. Soupape de réglage électropneumatique selon la revendication 1,
**caractérisée en ce qu'**un épaulement (24) est formé dans la section terminale distale de ladite section de tube (20) afin de permettre une fixation positive dudit manchon de guidage (17) du côté terminal de façon stationnaire relativement à ladite soupape de relais (1).

8. Soupape de réglage électropneumatique selon la revendication 1,
**caractérisée en ce que** l'extrémité distale de ladite section de tube (20) est formée sous forme crevassée afin d'assurer la sortie libre de l'air évacué sortant de ladite canalisation d'aération (21).

9. Soupape de réglage électropneumatique selon la revendication 1,
**caractérisée en ce que** la paroi de ladite section de tube (20) est renforcé moyennant un système à nervures pour la maximisation de la section mouillée de ladite canalisation d'aération (21) d'une telle façon, que l'épaisseur de paroi requise ainsi que la diamètre total dans la zone de ladite section de tube (20) se trouve à un minimum.

10. Soupape de réglage électropneumatique selon la revendication 9,
**caractérisée en ce que** ledit système à nervures consiste en au moins quatre nervures intégrales (26a à 26d) s'étendant en sens axial le long de la paroi extérieure de ladite section de tube (20) et orienté essentiellement aux axes parallèles relativement à ladite section de tube (20), ces nervures étant disposées en un arrangement équidistant, vue en coupe transversale.
